# EUROPÄISCHE PATENTSCHRIFT

(11) **EP 3 279 020 B1**
(45) Veröffentlichungstag und Bekanntmachung des Hinweises auf die Patenterteilung: **24.04.2019**
(21) Anmeldenummer: 17184751.0
(22) Anmeldetag: 03.08.2017
(51) Int. Cl.: B60Q 1/26, B60Q 1/32, B60R 13/04, F21S 43/237, F21S 43/245, B60J 10/265, B60J 10/75

(54) **ENDKAPPE FÜR EINE BELEUCHTETE ZIERLEISTENANORDNUNG SOWIE ZIERLEISTENANORDNUNG**
END CAP FOR AN ILLUMINATED DECORATIVE MOULDING ASSEMBLY AND DECORATIVE MOULDING ASSEMBLY
BOUCHON D'EXTRÉMITÉ POUR UN ENSEMBLE MOULURE DÉCORATIF ÉCLAIRÉ AINSI QU'ENSEMBLE MOULURE DÉCORATIF

(30) Priorität: 03.08.2016 DE 102016114353
(43) Veröffentlichungstag der Anmeldung: 07.02.2018
(73) Patentinhaber: DURA Operating, LLC, Auburn Hills, MI 48326 (US)
(72) Erfinder: Hundt, Torsten, 58809 Neuenrade (DE); Krehmer, Antje, 71065 Sindelfingen (DE); Deuscher, Oliver, 72829 Engstingen (DE); Fisch, Markus, 71065 Sindelfingen (DE); Pastor, Joaquin Rodrigo, 71065 Sindelfingen (DE)
(74) Vertreter: Bungartz Christophersen Partnerschaft mbB Patentanwälte

(56) Entgegenhaltungen:
- EP-A2- 2 298 607
- WO-A1-2015/154972
- DE-A1-102014 015 186

## Beschreibung

Die Erfindung geht aus von einer beleuchteten Zierleistenanordnung für ein Kraftfahrzeug mit einem den stirnseitigen Abschluss der Zierleistenanordnung bildenden Endabschnitt, insbesondere von einer im Bereich eines Fensterschachts oder eines Fensterrahmens einer Kraftfahrzeugtür auf die Fahrzeugkarosserie aufzusetzenden Zierleistenanordnung, wobei der Endabschnitt eine im bestimmungsgemäßen Endeinbauzustand von außen sichtbare Außenfläche und eine im bestimmungsgemäßen Endeinbauzustand innen liegende, von außen nicht sichtbare Innenfläche aufweist, auf die das von einem Leuchtmittel emittierte Licht auftrifft, bevor es sichtbar aus der Zierleistenanordnung nach außen hervortritt.

Eine beleuchtete Zierleistenanordnung dieser Art ist aus der EP 2 298 607 A2 bekannt. Bei dieser, als Schachtabdeckung ausgebildeten Zierleistenanordnung ist bei bestimmungsgemäßem Einbau unterhalb der Zierleiste ein Lichtspalt vorgesehen, durch den Licht nach außen hervorzutreten vermag.

Beleuchtete Zierleistenanordnungen, die im Bereich eines Fensterschachts oder eines Fensterrahmens einer Kraftfahrzeugtür auf einen Teil einer Kraftfahrzeugkarosserie aufzusetzen sind, sind weiterhin zum Beispiel aus der WO 2015/154972 A1 und der DE 10 2014 015 186 A1 bekannt. Bei derartigen Zierleistenanordnungen ist eine Profilleiste auf ein Dichtungsprofil aufgesetzt und von diesem getragen. Das Dichtungsprofil wird wiederum auf der Karosserie aufgesetzt und dort gehalten. Im endmontierten Zustand bildet die Profilleistenanordnung zwischen einer unteren Sichtkante und der angrenzenden Fahrzeugaußenfläche einen Lichtspalt aus, aus dem das von einem hinter der Profilleiste befindlichen Leuchtmittel emittierte Licht nach außen sichtbar hervortritt. Von einer solchen Zierleistenanordnung geht auch die Erfindung im Nachfolgenden aus.

Für einen qualitativ hochwertigen Gesamteindruck ist es erforderlich, dass der Lichtspalt über seine gesamte Länge hinweg sehr gleichmäßig ausgeleuchtet wird. Es hat sich in Versuchen herausgestellt, dass eine gleichmäßige Ausleuchtung des Lichtspalts über die gesamte Länge der Zierleistenanordnung, also insbesondere über die gesamte Länge der Türbrüstungslinie, nur sehr schwer zu erzielen ist, weil die Ausleuchtung des Lichtspalts bzw. die äußerlich erkennbaren Reflexionen auf der Fahrzeugaußenhaut sehr "empfindlich" auf kleinere Veränderungen etwa bei der Führung und Halterung des als Leuchtmittel eingesetzten Lichtleiters reagiert. Schon kleinere Abweichungen oder Unregelmäßigkeiten im Reflexionsvermögen der hinter der Profilleiste liegenden Oberflächen oder in der Lichtspaltbreite oder in der Führung, Halterung und Positionierung des Lichtleiters werden von außen als ungleichmäßige Ausleuchtung des Lichtspalts wahrgenommen. Auch an Bauteilübergängen, also an Stellen, an denen verschiedene Bauteile der Zierleistenanordnung aneinanderstoßen und es in Längsrichtung gesehen zu einem Material- bzw. Oberflächenwechsel innerhalb der Zierleistenanordnung kommt, können von außen deutlich wahrnehmbare Ausleuchtungs- oder Reflexionsunterschiede auftreten. Besonders schwierig ist das Erzielen einer gleichmäßigen Ausleuchtung im Bereich des Endes der Zierleistenanordnung, weil hier zum einen der als Leuchtmittel eingesetzte Lichtleiter in von außen nicht sichtbarer Weise unter Änderung seiner Verlaufsrichtung ins Fahrzeuginnere abknicken muss und zum anderen die Zierleistenanordnung einen optisch gefälligen konstruktiven "Abschluss" finden muss, was wiederum die Verwendung eines Endabschnitts erfordert, der diesen Anforderungen gerecht wird.

Vor diesem Hintergrund macht es sich die Erfindung zur Aufgabe, eine der vorstehend beschriebenen Zierleistenanordnungen mit einem Endabschnitt zur Verfügung zu stellen, der eine gleichmäßige Ausleuchtung ermöglicht, ohne das äußere Erscheinungsbild der Zierleistenanordnung zu beeinträchtigen. Insbesondere sollen im Endbereich der Zierleistenanordnung Unregelmäßigkeiten bei der Ausleuchtung des Lichtspalts und dem äußeren Erscheinungsbild der Zierleistenanordnung vermieden werden, so dass sich im beleuchteten und unbeleuchteten Zustand über die gesamte Länger der Zierleiste hinweg ein durchgängig harmonisches Erscheinungsbild ergibt.

Die Erfindung löst diese Aufgabe dadurch, dass die Außenfläche des Endabschnitts zumindest zum Teil als Sichtfläche ausgebildet ist, die das äußere Erscheinungsbild einer äußerlich sichtbaren Fläche eines angrenzenden oder vom Endabschnitt fortgeführten Bauteils der endmontierten Zierleistenanordnung insbesondere farblich angeglichen ist oder gleicht, und die Innenfläche zumindest zum Teil als Reflexionsfläche ausgebildet ist, die ein gegenüber der Sichtfläche anderes, insbesondere erhöhtes, Reflexionsvermögen aufweist. Das Reflexionsvermögen der Reflexionsfläche ist dabei bevorzugt an das Reflexionsvermögen in dem außerhalb des Endabschnitts liegenden Reflexionsbereich der Zierleistenanordnung, der für die Ausleuchtung des Lichtspalts außerhalb des von dem Abschlussteil im Endabschnitt eingenommenen Abschnitts der Zierleistenanordnung maßgeblich ist, angeglichen oder gleicht diesem.

Hierdurch wird erreicht, dass das endseitig der Zierleistenanordnung vorzusehende Zierleistenendabschnitt, der zumindest teilweise auch von außen wahrnehmbare Außenflächen aufweist, insbesondere die äußerlich sichtbaren Flächen des typischerweise schwarzen Dichtungsprofils, auf dem die Profilleiste aufgesetzt und gehalten ist, optisch weiterführen kann. Gleichzeitig gewährleistet die gezielte Ausgestaltung eines relevanten Teils der Innenfläche als Reflexionsfläche, dass beim Übergang in den Endabschnitt ausgehend von einem angrenzenden oder einem mit dem Endabschnitt fortführenden Bauteils und dem damit gegebenenfalls verbundenen Materialwechsel keine äußerlich wahrnehmbaren Unterschiede bei der Ausleuchtung des Lichtspalts erkennbar sind, weil sich das hinter der Profilleiste liegende Reflexionsverhalten nicht derart ändert, dass eine äußerlich wahrnehmbarer Lichtspaltausleuchtungsunterschied entsteht.

Typischerweise wird die Sichtfläche eine die Farbgebung eines angrenzenden Dichtungsprofils oder der angrenzenden Profilleiste fortführende Farbgebung aufweisen. So kann der Übergang von Dichtungsprofil bzw. Profilleiste auf in den Endabschnitt effektiv optisch kaschiert werden.

Es kann vorgesehen sein, dass im Bereich der Reflexionsfläche eine Reflexionsbeschichtung auf den Endabschnitt aufgebracht ist. Eine derartige Beschichtung kann von einer (Farb-)Lackierung oder einer auf sonstige Weise aufgebrachten Reflexionsbeschichtung gebildet sein.

Es kann aber auch vorgesehen sein, dass der die Reflexionsfläche des Endabschnitts bildende Materialbereich unbeschichtet ist. In einem solchen Fall ist bevorzugt vorgesehen, dass der die Reflexionsfläche des Endabschnitts bildende Materialbereich des Endabschnitts von einem ersten Material gebildet ist, und die Sichtfläche bildende Materialabschnitt des Endabschnitts von einem zweiten Material gebildet ist, wobei eine Oberfläche, die aus dem ersten Material gebildet ist, gegenüber einer Oberfläche, die aus dem zweiten Material gebildet ist, ein gegenüber dem zweiten Material anderes, insbesondere erhöhtes, Reflexionsvermögen aufweist.

Das erste Material und das zweite Material müssen dabei nicht unbedingt derart unterschiedlich sein, dass es sich um andere Grundmaterialien handelt. Vielmehr können beide Materialabschnitte des Endabschnitts aus dem gleichen Grundmaterial hergestellt sein, zum Beispiel aus dem gleichen "Grundkunststoff", wobei das erste Material und das zweite Material lediglich mit anderen Zusätzen, insbesondere Füllstoffen bzw. Farbstoffen, versehen sind. So kann das erste Material insbesondere mit wenigstens einem das Reflexionsvermögen erhöhenden Zusatz versehen sein, der im zweiten Material nicht vorhanden ist. Oder das zweite Material kann mit wenigstens einem das Reflexionsvermögen herabsetzenden Zusatz versehen sein, der im ersten Material nicht vorhanden ist. Insbesondere kann vorgesehen sein, dass die Sichtfläche schwarz ist, um die angrenzende Oberfläche des typischerweise schwarzen Dichtungsprofils fortzuführen, während die Reflexionsfläche bevorzugt weiß ist.

Um die beiden unterschiedlichen Materialabschnitte am Bauteil zu schaffen, ist bevorzugt vorgesehen, dass der Endabschnitt ein im Mehrkomponenten-Spritzgussverfahren hergestelltes Bauteil oder ein im Mehrkomponenten-Spritzgussverfahren hergestellter Bauteilabschnitt ist.

Bevorzugt ist vorgesehen, dass die Zierleistenanordnung eine Schachtleistendichtung ist. Hierbei kann insbesondere vorgesehen sein, dass Zierleistenanordnung eine als einteiliger Bauteilverbund ausgebildete Dichtleiste mit bevorzugt extrudierten Dichtlippen und einem (Stahl-)Einleger umfasst, wobei der Endabschnitt insbesondere an diese Dichtleiste stoffschlüssig angeformt ist, beispielsweise an die Dichtleiste angespritzt, angeklebt oder anvulkanisiert ist. Bei der Zierleistenanordnung kann allerdings alternativ auch vorgesehen sein, dass der Endabschnitt ein von dem Dichtungsprofil und der Profilleiste separates Bauteil ist und endseitig auf das Dichtungsprofil oder die Profilleiste aufgesetzt und dort als stirnseitiges Abschlussteil insbesondere klemmend gehalten ist. Das Abschlussteil bildet so eine auf die Zierleistenanordnung aufsetzbare Endkappe.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine perspektivische Darstellung eines Endbereichs einer Zierleistenanordnung mit einem als Leuchtmittel eingesetzten Lichtleiter unter zeichnerischer Weglassung der eine Dichtleiste und einen Endabschnitt der Zierleistenanordnung teilabdeckenden Profilleiste,
- Fig. 2: die in Figur 1 gezeigte Zierleistenanordnung in einer Darstellung mit Blick auf die Stirnseite,
- Fig. 3: die Zierleistenanordnung aus Figur 2 mit der auf das Dichtungsprofil aufgesetzten Profilleiste, und
- Fig. 4: den schon in den vorherigen Figuren erkennbaren Endabschnitt der Zierleistenanordnung in einer Einzeldarstellung, bei der ein eine Sichtfläche bildender zweiter Materialabschnitt durch eine Kreuzschraffur zeichnerisch hervorgehoben ist.

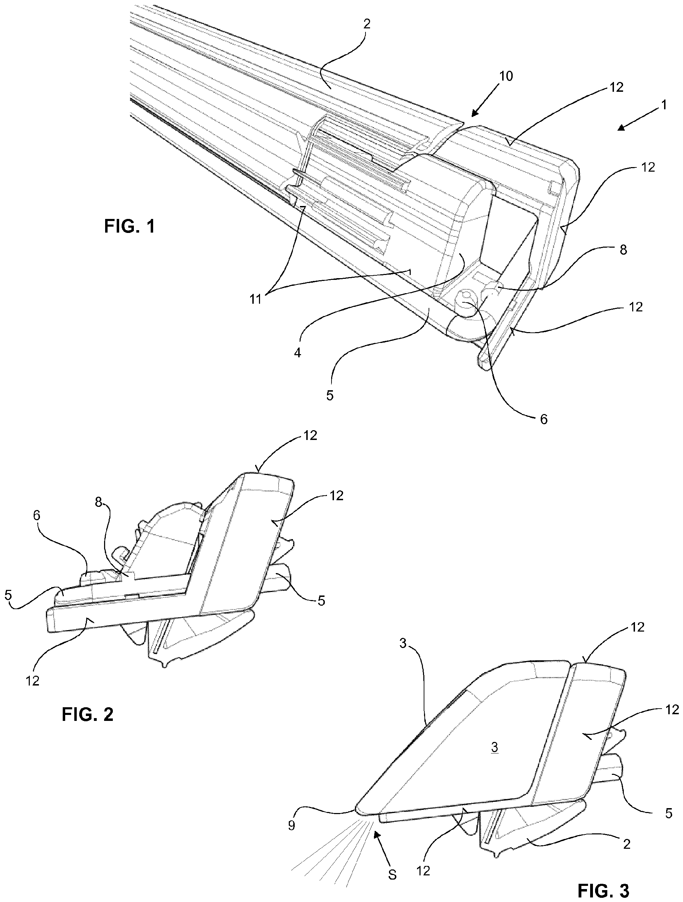

Figur 1 zeigt eine Zierleistenanordnung 1 unter Weglassung einer ein Dichtungsprofil 2 abdeckenden Profilleiste 3 (siehe Figur 3) mit einem als stirnseitiger Abschluss dienenden Endabschnitt 4 und einem als Leuchtmittel eingesetzten Lichtleiter 5 in einer perspektivischen Ansicht. Diese Zierleistenanordnung 1 entspricht in Teilen der in den eingangs erwähnten Druckschriften WO 2015/154972 A1 und der DE 10 2014 015 186 A1 offenbarten Anordnungen.

Das in Figur 1 dargestellte Dichtungsprofil 2 ist dazu eingerichtet, als Fensterschachtdichtung auf den entsprechenden Karosserieabschnitt einer Fahrzeugtür aufgesetzt zu werden. Endseitig wird das Dichtungsprofil 2 in Richtung des stirnseitigen Endabschnitts 4 der Zierleistenanordnung 1 unter Bildung einer Fuge von dem Endabschnitt 4 ergänzt, der letztlich die Zierleistenanordnung 1 endseitig abschließt.

Der Lichtleiter 5 erstreckt sich in Längsrichtung entlang des Dichtungsprofils 2 über die Fuge zwischen Dichtungsprofil 2 und Endabschnitt 4 hinweg, um dann unmittelbar vor dem stirnseitigen Abschluss der Zierleistenanordnung 1 um einen Umlenkdorn 6 in einem Radius um etwa 90° abknickend herumgelegt zu werden. Anschließend durchläuft der Lichtleiter 5 eine diesen umgreifende Lichtleiterhalterung 8 und eine in dem Endabschnitt 4 vorgesehene Durchführöffnung, durch die hindurch der Lichtleiter 5 in das Fahrzeuginnere zu einer Lichteinspeisungseinrichtung geführt wird.

Figur 2 zeigt zur weiteren Veranschaulichung die in Figur 1 gezeigte Zierleistenanordnung 1 in einer Darstellung mit Blick auf die das stirnseitige Ende der Zierleistenanordnung 1, ebenfalls unter Weglassung der Profilleiste 3.

In Figur 1 und Figur 2 nicht, gleichwohl in aber in Figur 3 von der Stirnseite her dargestellt, ist eine im bestimmungsgemäßen Endeinbauzustand der Zierleistenanordnung 1 auch über dem Endabschnitt 4 und dem Dichtungsprofil 2 angeordnete Profilleiste 3. Diese Profilleiste 3 ist ein bevorzugt nicht lichtdurchlässiges Leistenbauteil, etwa ein bevorzugt stranggepresstes, poliertes, gebürstetes, beschichtetes oder lackiertes Metallprofil, das sich, wenn bestimmungsgemäß auf das Dichtungsprofil 2 und den Endabschnitt 4 teilabdeckend 4 aufgesetzt, über annähernd die gesamte Länge der Zierleistenanordnung 1 erstreckt und als Zier- und Abdeckleiste des Dichtungsprofils 2 und des Endabschnitts 4 fungiert und sich auch über die Fuge, die im Bereich des Übergangs vom Mittelabschnitt des Dichtungsprofils 2 auf den Endabschnitt 4 desselben gebildet ist, erstreckt, so dass die Fuge - mit Ausnahme eines oberen Fugenabschnitts 10 - nicht sichtbar ist.

An dem in Figur 3 dargestellten stirnseitigen Ende ist ein Materialbereich der Zierleiste umgelegt, um das das stirnseitig weitgehend materialoffene Ende des Endabschnitts 4 optisch zu schließen bzw. zu überdecken.

Wie insbesondere in den bereits genannten Druckschriften WO 2015/154972 A1 und der DE 10 2014 015 186 A1 gezeigt und wie schematisch auch in Figur 3 gezeigt, tritt bei eingeschalteter Beleuchtung zwischen der unteren Sichtkante 9 der Profilleiste 3 und dem Endabschnitt 4 bzw. dem Dichtungsprofil 2 aus einem Lichtspalt S Licht heraus, dass in Figur 3 durch die aus dem Lichtspalt S heraustretenden dünnen Strahlungslinien symbolisiert ist. Der Lichtspalt S, durch den das von dem Lichtleiter 5 emittierte Licht nach außen hervortritt, ist durch einen Spalt zwischen der unteren Sichtkante 9 der Profilleiste 3 und dem Dichtungsprofil 2 oder zwischen der unteren Sichtkante 9 der Profilleiste 3 und der im bestimmungsgemäßen Endeinbauzustand an die Zierleistenanordnung 1 angrenzende Fahrzeugaußenfläche gebildet. Der Lichtspalt S erstreckt sich mit konstanter Lichtspaltbreite über die gesamte Länge der Zierleistenanordnung 1.

Wie aus den Darstellungen in der Gesamtheit ersichtlich, gibt es an der Fuge einen oberen Fugenabschnitt 10, der bei aufgesetzter Profilleiste 3 nicht von dieser abgedeckt wird. An diesen Fugenabschnitt 10 grenzt somit ein Teil einer Außenfläche 12 des Endabschnitts 4 an, die auch bei bestimmungsgemäß endmontierter Profilleiste 3 von außen sichtbar ist. Insbesondere ist an dem oberen Fugenabschnitt 10 der Übergang von dem typischerweise schwarzen Dichtungsprofil 5 auf die Außenfläche 12 des Endabschnitts 4 sichtbar.

In dem im bestimmungsgemäßen Endeinbauzustand von der Profilleiste 3 abgedeckten Bereich, in dem der Lichtleiter 5 den Endabschnitt 4 passiert, weist der Endabschnitt 4 eine von der der Profilleiste 3 im endmontierten Zustand abgedeckte und daher von außen nicht sichtbare Innenfläche 11 auf. Das von dem Lichtleiter 5 emittierte Licht wird von dieser Innenfläche 11 teilreflektiert und tritt zumindest zum Teil durch den Lichtspalt S nach außen. Um einen gleichmäßigen Lichtdurchtritt durch den Lichtspalt S über die gesamte Länge der Zierleistenanordnung 1 zu gewährleisten, ist dafür Sorge zu tragen, dass die das von dem Lichtleiter 5 emittierte Licht teilreflektierende Innenfläche 11 des Endabschnitts 4 derart ausgestaltet ist, dass das Licht in ausreichendem Maße nach außen reflektiert und von der Innenfläche 11 nicht "verschluckt" wird, so dass sich an der Fahrzeugaußenhaut keine ungleichmäßig beleuchteten Zonen ergeben.

Es ist erkennbar, dass die Anforderung an die Außenfläche 12 der Endkappe, die äußerlich sichtbaren Teilflächen des typischerweise matt schwarzen Gummi-Dichtungsprofils über den oberen Fugenabschnitt 10 hinweg ohne optischen Bruch optisch harmonisch weiterzuführen, sich mit der gleichzeitigen Anforderung an die Innenfläche 11 des Endabschnitts, ein möglichst hohes Reflexionsvermögen aufzuweisen, nicht verträgt. Daher ist vorgesehen, dass die Außenfläche 12 zumindest zum Teil als Sichtfläche ausgebildet ist, die dem äußeren Erscheinungsbild des an diese Außenfläche 12 angrenzenden äußerlich sichtbaren Dichtungsprofilabschnitts angeglichen ist, und die Innenfläche 11 zumindest zum Teil als Reflexionsfläche ausgebildet ist, die gegenüber der Außenfläche 12 bzw. dem als Sichtfläche ausgebildeten Teil der Außenfläche 12 ein erhöhtes Reflexionsvermögen aufweist.

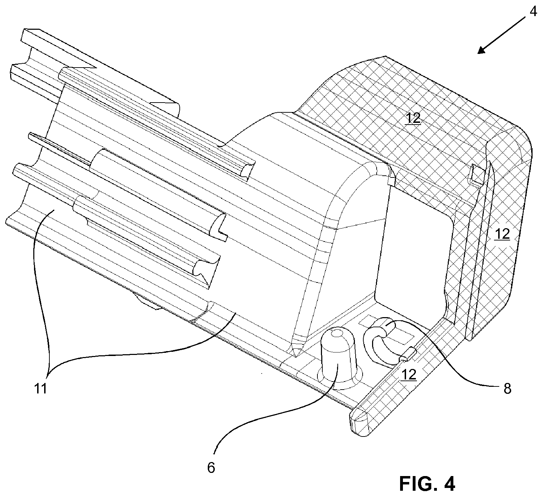

Figur 4, die den schon in den vorherigen Figuren erkennbaren Endabschnitt 4 in einer Einzeldarstellung unter Weglassung des weiteren Dichtungsprofils zeigt, verdeutlicht diese Maßnahme dadurch, dass der als Sichtfläche fungierende und der Außenfläche 12 zuzurechnende Materialabschnitt kreuzschraffiert ist, während der übrige Materialabschnitt des Endabschnitts 4, also auch der als Reflexionsfläche fungierende Materialabschnitt der Innenfläche 11, unschraffiert dargestellt ist.

Bei dem in Figur 4 gezeigten Ausführungsbeispiel ist der die Reflexionsfläche des Endabschnitts 4 bildende Materialabschnitt von einem ersten Material gebildet ist, und der die Sichtfläche bildende Materialabschnitt ist von einem zweiten Material gebildet. Die Reflexionsfläche, die aus dem ersten Material gebildet ist, verfügt bevorzugt einen sehr hellen Farbton, und weist somit gegenüber der Sichtfläche ein erhöhtes Reflexionsvermögen auf. Die Sichtfläche, die aus dem zweiten Material gebildet und an das typischerweise mattschwarze Äußere des Dichtungsprofils angeglichen ist, weist bevorzugt einen schwarzen oder dunkelgrauen Farbton mit typischerweise geringem Reflexionsvermögen auf.

Zur Bildung des Endabschnitts 4 aus sowohl einem ersten als auch aus einem zweiten Material ist der in Figur 4 dargestellte Endabschnitt 4 des Dichtungsprofils 1 bevorzugt im Mehrkomponentenspritzguss hergestellt.

### Bezugszeichenliste

- 1: Zierleistenanordnung
- 2: Dichtungsprofil
- 3: Profilleiste
- 4: Endabschnitt
- 5: Lichtleiter
- 6: Umlenkdorn
- 8: Lichtleiterhalterung
- 9: untere Sichtkante der Profilleiste
- 10: oberer Fugenabschnitt
- 11: Innenfläche
- 12: Außenfläche

- S: Lichtspalt

## Patentansprüche

1. Zierleistenanordnung (1) für ein Kraftfahrzeug, die eingerichtet ist, im bestimmungsgemäßen Einbauzustand ein Leuchtmittel (5) zu halten, insbesondere eine im Bereich eines Fensterschachts oder eines Fensterrahmens einer Kraftfahrzeugtür auf die Fahrzeugkarosserie aufzusetzende Zierleistenanordnung (1), mit einem den stirnseitigen Abschluss der Zierleistenanordnung (1) bildenden Endabschnitt (4), wobei der Endabschnitt (4) eine im bestimmungsgemäßen Endeinbauzustand von außen sichtbare Außenfläche (12) und eine im bestimmungsgemäßen Endeinbauzustand innen liegende Innenfläche (11) aufweist, auf die zumindest ein Teil des von einem im bestimmungsgemäßen Einbauzustand von der Zierleistenanordnung (1) gehaltenen Leuchtmittels (5) emittierten Lichts auftrifft, bevor es sichtbar aus der endmontierten Zierleistenanordnung (1) nach außen hervortritt, wobei die Außenfläche (12) zumindest zum Teil als Sichtfläche ausgebildet ist und die Außenfläche (12) dem äußeren Erscheinungsbild einer äußerlich sichtbaren Fläche eines angrenzenden oder vom Endabschnitt (4) fortgeführten Bauteils (2) der endmontierten Zierleistenanordnung (1) angeglichen ist oder gleicht, **dadurch gekennzeichnet, dass** die Innenfläche (11) zumindest zum Teil als Reflexionsfläche ausgebildet ist, die ein gegenüber der Sichtfläche anderes Reflexionsvermögen aufweist.

2. Zierleistenanordnung (1) nach Anspruch 1, **dadurch gekennzeichnet, dass** die Sichtfläche eine die Farbgebung eines angrenzenden Dichtungsprofils (2) oder vom Endabschnitt (4) fortgeführten Dichtungsprofils (2) oder einer angrenzenden oder vom Endabschnitt (4) fortgeführten Profilleiste (3) aufweist.

3. Zierleistenanordnung (1) nach dem vorhergehenden Anspruch, **dadurch gekennzeichnet, dass** der Endabschnitt (4) ein im Mehrkomponenten-Spritzgussverfahren hergestelltes Bauteil oder ein im Mehrkomponenten-Spritzgussverfahren hergestellter Bauteilabschnitt des Dichtungsprofils (2) ist.

4. Zierleistenanordnung (1) nach einem der beiden vorhergehenden Ansprüche, **dadurch gekennzeichnet, dass** das Dichtungsprofil (2) als Bauteilverbund mit Dichtlippen und einem Einleger ausgebildet ist.

5. Zierleistenanordnung (1) nach Anspruch 2, **dadurch gekennzeichnet, dass** der Endabschnitt (4) an das Dichtungsprofil (2) stoffschlüssig angeformt ist oder integraler Bestandteil des Dichtungsprofils (2) ist.

6. Zierleistenanordnung (1) nach Anspruch 2 **dadurch gekennzeichnet, dass** der Endabschnitt (4) ein von dem Dichtungsprofil (2) und einer Profilleiste (3) separates Bauteil bildet, das endseitig auf das Dichtungsprofil (2) oder die Profilleiste (3) aufgesetzt und dort als stirnseitiges Abschlussteil gehalten ist.

7. Zierleistenanordnung (1) nach einem der vorhergehenden Ansprüche, **dadurch gekennzeichnet, dass** im Bereich der Reflexionsfläche eine Reflexionsbeschichtung aufgebracht ist.

8. Zierleistenanordnung (1) nach einem der vorhergehenden Ansprüche, **dadurch gekennzeichnet, dass** der die Reflexionsfläche des Endabschnitts (4) bildende Materialabschnitt des Endabschnitts (4) von einem ersten Material gebildet ist und der die Sichtfläche bildende Materialabschnitt des Endabschnitts (4) von einem zweiten Material gebildet ist, wobei eine Oberfläche, die aus dem ersten Material gebildet ist, gegenüber einer Oberfläche, die aus dem zweiten Material gebildet ist, ein gegenüber der von dem zweiten Material gebildeten Oberfläche anderes Reflexionsvermögen aufweist.

9. Zierleistenanordnung (1) nach dem vorhergehenden Anspruch, **dadurch gekennzeichnet, dass** das erste Material oder das zweite Material mit wenigstens einem das Reflexionsvermögen beeinflussenden Zusatz versehen ist, der im jeweils anderen Material nicht vorhanden ist.

10. Zierleistenanordnung (1) nach einem der Ansprüche 1, 2, 3, 4, 5, 7 oder 8, **dadurch gekennzeichnet, dass** der die Reflexionsfläche des Endabschnitts (4) bildende Materialabschnitt unbeschichtet ist.

11. Zierleistenanordnung (1) nach einem der vorhergehenden Ansprüche, **dadurch gekennzeichnet, dass** die Sichtfläche schwarz und die Reflexionsfläche weiß ist.

12. Zierleistenanordnung (1) nach einem der vorhergehenden Ansprüche, **dadurch gekennzeichnet, dass** die Zierleistenanordnung (1) eine Schachtleistendichtung ist.

## Claims

1. Decorative trim arrangement (1) for a motor vehicle, designed for holding light source (5) in its intended installation state, in particular a decorative trim arrangement (1) to be attached to the vehicle chassis in the area of a window channel or a window frame of a motor vehicle door, with an end section (4) forming the facing side end of the decorative trim arrangement (1), wherein the end section (4) has an outer surface (12) visible from the outside in the intended final installation state, and has an inner interior surface (11) in an intended final installation state, onto which at least a part of the light emitted by the light source (5) held by the decorative trim arrangement (1) in the intended installation state hits before it visibly exits the final mounted decorative trim arrangement (1) to the outside, wherein the outer surface (12) is at least in part a visible surface, the outer surface (12) being matched to or being equal to the outer appearance of a surface being visible from the outside of an adjacent component (2) or of a component continued by the end section (4) of the final mounted decorative trim arrangement (1), **characterised in that** the inner surface (11) is at least partly a reflection surface, which has a reflection capacity that differs from that of the visible surface.

2. Decorative trim arrangement (1) according to claim 1, **characterised in that** the visual surface has the colouring of an adjacent sealing profile (2) or of the end section (4) continuing the sealing profile (2), or of an adjacent continued profile trim (3) or an end section (4).

3. Decorative trim arrangement (1) according to the preceding claim, **characterised in that** the end section (4) is a component produced with the multi-component injection moulding method or a component section of the sealing profile (2) produced with a multi-component injection moulding process.

4. Decorative trim arrangement (1) according to one of the two preceding claims, **characterised in that** the sealing profile (2) is formed as a component compound with sealing lips and an insert.

5. Decorative trim arrangement (1) according to claim 2, **characterised in that** the end section (4) is moulded to the sealing profile (2) by means of material closure or is an integral part of the sealing profile (2).

6. Decorative trim arrangement (1) according to claim 2, **characterised in that** the end section (4) forms a component that is separate from the sealing profile (2) and a profile trim (3), which is attached at the end of the sealing profile (2) or the profile trim (3) and is held there as a facing side end part.

7. Decorative trim arrangement (1) according to one of the preceding claims, **characterised in that** a reflection coating is applied in the area of the reflection surface.

8. Decorative trim arrangement (1) according to one of the preceding claims, **characterised in that** the material section of the end section (4) forming the reflection surface of the end section (4) is formed by a first material, and the material section of the end section (4) forming the visual surface is formed by a second material, wherein a surface formed from the first material has a different reflection capacity compared to a surface formed from the second material.

9. Decorative trim arrangement (1) according to the preceding claim, **characterised in that** the first material or the second material is equipped with at least one additive that influences the reflection capacity, which is not present in the respective other material.

10. Decorative trim arrangement (1) according to one of the claims 1, 2, 3, 4, 5, 7 or 8, **characterised in that** the material section forming the reflection surface of the end section (4) is uncoated.

11. Decorative trim arrangement (1) according to one of the preceding claims, **characterised in that** the visual surface is black and the reflection surface is white.

12. Decorative trim arrangement (1) according to one of the preceding claims, **characterised in that** the decorative trim arrangement (1) is a sealing profile of a window shaft.

## Revendications

1. Dispositif d enjoliveur (1) pour un véhicule automobile qui est mis en place de manière à maintenir une lampe (5) dans un état de montage conforme, notamment un dispositif d enjoliveur (1) à poser sur la carrosserie du véhicule dans la zone d un puits de vitre ou d un cadre de fenêtre d une portière de véhicule automobile, avec une section terminale (4) formant l extrémité frontale du dispositif d enjoliveur (1), la section terminale (4) présentant une surface extérieure (12) visible de l extérieur dans un état de montage final conforme et une surface intérieure (11) située à l intérieur dans un état de montage final conforme, sur laquelle au moins une partie de la lumière émise par la lampe (5) maintenue par le dispositif d enjoliveur (1) dans un état de montage conforme est réfléchie avant qu elle ne ressorte visiblement de l extérieur du dispositif d enjoliveur (1) entièrement monté, la surface extérieure (12) étant formée au moins partiellement comme une surface visible et la surface extérieure (12) étant adaptée ou semblable à l ensemble extérieur d une surface visible de l extérieur d un composant (2) adjacent ou amorti par la section terminale (4) du dispositif d enjoliveur (1) entièrement monté, **caractérisé en ce que** la surface intérieure (11) est formée au moins partiellement comme une surface réfléchissante qui présente un autre pouvoir réfléchissant par rapport à la surface visible.

2. Dispositif d enjoliveur (1) selon la revendication 1, **caractérisé en ce que** la surface visible présente une couleur d un profilé d étanchéité (2) adjacent ou d un profilé d étanchéité (2) amorti par la section terminale (4) ou d une baguette profilée (3) adjacente ou amortie par la section terminale (4).

3. Dispositif d enjoliveur (1) selon la revendication précédente, **caractérisé en ce que** la section terminale (4) est un composant fabriqué par un procédé de moulage par injection à plusieurs composants ou une section de composant du profilé d étanchéité (2) fabriqué par un procédé de moulage par injection à plusieurs composants.

4. Dispositif d enjoliveur (1) selon lune des deux revendications précédentes, **caractérisé en ce que** le profilé d étanchéité (2) est formé comme une pièce composite avec des lèvres d étanchéité et un insert.

5. Dispositif d enjoliveur (1) selon la revendication 2, **caractérisé en ce que** la section terminale (4) est moulée par conjugaison de matières sur le profilé d étanchéité (2) ou est une partie intégrante du profilé d étanchéité (2).

6. Dispositif d enjoliveur (1) selon la revendication 2, **caractérisé en ce que** la section terminale (4) forme un composant à part du profilé d étanchéité (2) et d une baguette profilée (3), ledit composant étant posé côté extrémité sur le profilé d étanchéité (2) ou la baguette profilée (3) et y étant maintenu comme partie d extrémité frontale.

7. Dispositif d enjoliveur (1) selon lune des revendications précédentes, **caractérisé en ce qu** un revêtement réfléchissant est apposé dans la zone de la surface réfléchissante.

8. Dispositif d enjoliveur (1) selon l une des revendications précédentes, **caractérisé en ce que** la section de matériaux de la section terminale (4) formant la surface réfléchissante de la section terminale (4) est composée d un premier matériau et la section de matériaux de la section terminale (4) formant la surface visible est composée d un deuxième matériau, une surface, qui est composée du premier matériau, à l opposée d une surface, qui est composée du deuxième matériau, présentant un autre pouvoir réfléchissant par rapport à la surface composée du deuxième matériau.

9. Dispositif d enjoliveur (1) selon la revendication précédente, **caractérisé en ce que** le premier matériau ou le deuxième matériau est prévu avec au moins un additif influençant le pouvoir réfléchissant qui n est pas présent respectivement dans l autre matériau.

10. Dispositif d enjoliveur (1) selon l une quelconque des revendications précédentes 1, 2, 3, 4, 5, 7 ou 8, **caractérisé en ce que** la section de matériaux formant la surface réfléchissante de la section terminale (4) n est pas revêtue.

11. Dispositif d enjoliveur (1) selon l une des revendications précédentes, **caractérisé en ce que** la surface visible est noire et la surface réfléchissante blanche.

12. Dispositif d enjoliveur (1) selon l une des revendications précédentes, **caractérisé en ce que** le dispositif d enjoliveur (1) est un joint de lécheur de vitre.
